# EUROPEAN PATENT APPLICATION

(11) **EP 3 725 546 A1**
(43) Date of publication of application: **21.10.2020**
(21) Application number: 18889487.7
(22) Date of filing: 20.11.2018
(51) Int. Cl.: B60C 9/20, B60C 9/00, B60C 9/18, D02G 3/48

(54) **TIRE REINFORCEMENT MEMBER AND TIRE USING SAME**

(30) Priority: 14.12.2017 JP 2017240025
(71) Applicant: Bridgestone Corporation, Chuo-Ku Tokyo 104-8340 (JP)
(72) Inventor: SASAKI, Yosuke, Tokyo 104-8340 (JP)
(74) Representative: Oxley, Robin John George
(86) International application number: PCT/JP2018/042849
(87) International publication number: WO 2019/116841

(57) **Abstract**

Provided are: a tire reinforcing member in which reinforcing cords have both satisfactory rigidity and satisfactory fatigue durability; and a tire including the same. A tire reinforcing member (100) includes a rubber-cord composite formed by arranging one or plural reinforcing cords (101) in parallel and coating the reinforcing cords (101) with a rubber. The reinforcing cords include carbon fiber cords having a double-twist structure constituted by final-twist cords formed by further twisting plural primary-twist cords each obtained by twisting plural carbon fiber filaments; the carbon fiber cords have a final twist coefficient, Z₁ = a × √(0.125 × c/C)/1,000, in a range of 0.01 to 1.0, and a primary twist coefficient, Z₂ = b × √(0.125 × d/C)/1,000, in a range of 0.01 to 1.0; and a cord interval Y between the reinforcing cords in a direction orthogonal to the cord longitudinal direction is in a range of 0.1 to 5 mm.

## Description

### TECHNICAL FIELD

The present invention relates to an improvement of a tire reinforcing member (hereinafter, also simply referred to as "reinforcing member") and a tire including the same.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the crown-portion tire radial-direction outer side of a carcass serving as a skeleton member of the tire is commonly adopted. In addition, as the structure of a belt, a mode in which upper and lower two belt layers are arranged such that their reinforcing cords intersect with each other, the reinforcing cords being folded back at the ends of the respective belt layers and configured to have a spirally wound structure in which the reinforcing cords extend from one belt layer to the other, is also known.

As such a structure, for example, Patent Document 1 discloses a pneumatic radial tire in which plural belt layers formed by arranging reinforcing cords are embedded on the outer peripheral side of a carcass layer in a tread portion, and upper and lower two belt layers are arranged such that their reinforcing cords composed of organic fibers intersect with each other. In this pneumatic radial tire, the reinforcing cords are folded back at the ends of the respective belt layers and configured to have a spirally wound structure in which they extend from one belt layer to the other, another belt layer formed by arranging reinforcing cords composed of steel cords is disposed between the upper and lower two belt layers, and the orientation angle α of the reinforcing cords of this belt layer is set at 45° to 65° with respect to the tire circumferential direction.

### RELATED ART DOCUMENT

### PATENT DOCUMENT

[Patent Document 1] JPH10-109502A

### SUMMARY OF THE INVENTION

### PROBLEMS TO BE SOLVED BY THE INVENTION

As reinforcing cords of tire reinforcing members, for example, organic fiber cords or steel cords are generally used as disclosed in Patent Document 1. In this respect, the rigidity of the reinforcing cords needs to be improved in order to enhance the tire performance; however, this requires an increase in diameter for those cords made of an existing material, and the increase in diameter is accompanied by an increase in weight and deterioration of the durability, which are conflicting performances.

It is also considered using high-rigidity fibers such as carbon fibers in the reinforcing cords to improve the rigidity without an increase in the cord diameter. However, high-rigidity fibers are generally poor in fatigue durability and thus have a problem in terms of durability; therefore, it is difficult to achieve both high rigidity and high fatigue durability.

In view of the above, an object of the present invention is to provide: a tire reinforcing member in which reinforcing cords have both satisfactory rigidity and satisfactory fatigue durability; and a tire including the same.

### MEANS FOR SOLVING THE PROBLEMS

The present inventor intensively studied to solve the above-described problems and consequently discovered that the problems can be solved by using carbon fiber cords, which have a double-twist structure having a prescribed twist structure and a prescribed twist coefficient, as reinforcing cords in a tire reinforcing member, and by defining the cords in the tire reinforcing member to have a prescribed interval.

That is, the tire reinforcing member of the present invention is a tire reinforcing member including a rubber-cord composite formed by arranging one or plural reinforcing cords in parallel and coating the reinforcing cords with a rubber,
the tire reinforcing member being characterized in that:
the reinforcing cords include carbon fiber cords having a double-twist structure constituted by final-twist cords formed by further twisting plural primary-twist cords each obtained by twisting plural carbon fiber filaments;
when a final twist number and a primary twist number of the carbon fiber cords are defined as "a" and "b", respectively, a total fineness of the carbon fiber cords is defined as "c", a total fineness of the primary-twist cords is defined as "d" and a cord specific gravity is defined as "C", the carbon fiber cords have a final twist coefficient Z₁, which is represented by Z₁ = tanθ₁ = a × √(0.125 × c/C)/1,000, in a range of 0.01 to 1.0, and a primary twist coefficient Z₂, which is represented by Z₂ = tanθ₂ = b × √(0.125 × d/C)/1,000, in a range of 0.01 to 1.0; and
when an end count of the reinforcing cords is defined as "A" (cords/50 mm) and a cord diameter of the reinforcing cords is defined as "B" (mm), a cord interval Y in a direction orthogonal to the cord longitudinal direction between the reinforcing cords that are adjacent to each other in the tire reinforcing member, which is represented by Y = (50 - A × B)/A, is in a range of 0.1 to 5 mm.

In this case, it is preferred that the carbon fiber cords have a final twist coefficient Z₁ in a range of 0.01 to 0.9 and a primary twist coefficient Z₂ in a range of 0.01 to 0.5, and it is more preferred that the carbon fiber cords have a final twist coefficient Z₁ in a range of 0.3 to 0.7 and a primary twist coefficient Z₂ in a range of 0.1 to 0.35.

In the reinforcing member of the present invention, it is preferred that the total fineness c of the carbon fiber cords be in a range of 1,000 to 30,000 dtex, and the total fineness d of the primary-twist cords be in a range of 300 to 10,000 dtex; it is more preferred that the total fineness c of the carbon fiber cords be in a range of 5,000 to 30,000 dtex, and the total fineness d of the primary-twist cords be in a range of 1,500 to 10,000 dtex; and it is still more preferred that the total fineness c of the carbon fiber cords be in a range of 10,000 to 21,000 dtex, and the total fineness d of the primary-twist cords be in a range of 3,000 to 7,000 dtex.

The reinforcing member of the present invention preferably includes a spiral cord layer in which an upper layer and a lower layer are formed by spirally winding the rubber-cord composite, and the reinforcing member of the present invention may also include a core-material cord layer between the upper layer and the lower layer of the spiral cord layer. In this case, it is preferred that a core-material cord of the core-material cord layer be composed of a metal cord, and that the core-material cord have an inclination angle of 40° to 90° with respect to the longitudinal direction of the core-material cord layer. Further, the core-material cord layer preferably has a thickness of 1 to 3 mm.

A tire of the present invention is characterized by including the above-described tire reinforcing member.

In the present invention, the total fineness c of the carbon fiber cords and the total fineness d of the primary-twist cords can be measured in accordance with JIS L1017.

### EFFECTS OF THE INVENTION

According to the present invention, a tire reinforcing member in which reinforcing cords have both satisfactory rigidity and satisfactory fatigue durability, as well as a tire including the same, can be realized.

### BRIEF DESCRIPTION OF THE DRAWINGS

[FIG. 1] FIG. 1 is a partial cross-sectional view illustrating one example of a tire reinforcing member of the present invention in a direction orthogonal to the longitudinal direction of reinforcing cords.
[FIG. 2] FIG. 2 is a widthwise cross-sectional view illustrating another example of the tire reinforcing member of the present invention.
[FIG. 3] FIG. 3 is a schematic plan view illustrating angles of reinforcing cords in the example of the tire reinforcing member of the present invention shown in FIG. 2.
[FIG. 4] FIG. 4 is a tire widthwise cross-sectional view illustrating one example of the constitution of a tire for passenger vehicles according to the present invention.
[FIG. 5] FIG. 5 is a tire widthwise partial cross-sectional view of a tread portion, illustrating another example of the constitution of a tire for passenger vehicles according to the present invention.
[FIG. 6] FIG. 6 is a tire widthwise cross-sectional view illustrating one example of the constitution of a tire for trucks and buses according to the present invention.
[FIG. 7] FIG. 7 is a tire widthwise partial cross-sectional view of a tread portion, illustrating another example of the constitution of a tire for trucks and buses according to the present invention.
[FIG. 8] FIG. 8 is a tire widthwise cross-sectional view illustrating one example of the constitution of a tire for construction vehicles according to the present invention.
[FIG. 9] FIG. 9 is a tire widthwise partial cross-sectional view of a tread portion, illustrating another example of the constitution of a tire for construction vehicles according to the present invention.

### MODE FOR CARRYING OUT THE INVENTION

The present invention will now be described in detail referring to the drawings.

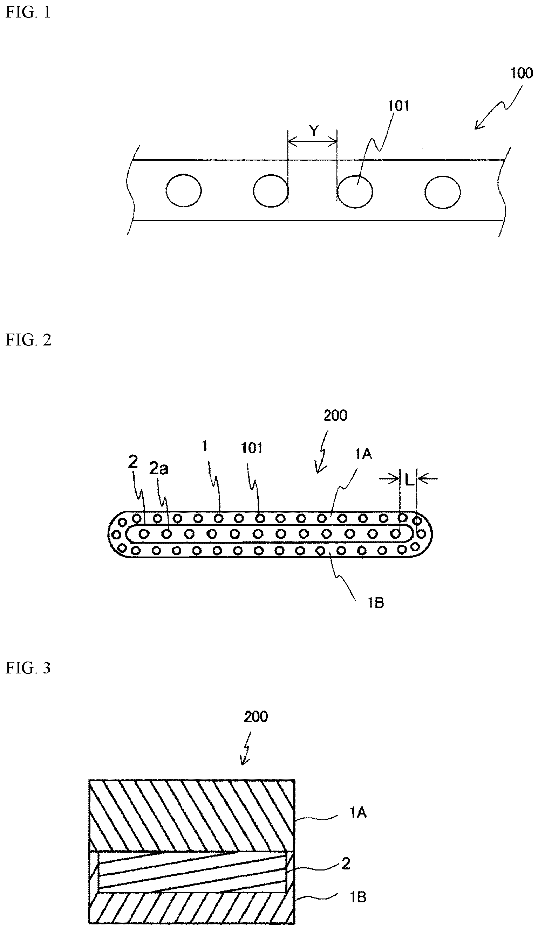

The tire reinforcing member of the present invention is formed using a rubber-cord composite obtained by arranging one or plural reinforcing cords in parallel and coating the reinforcing cords with a rubber. FIG. 1 is partial cross-sectional view illustrating one example of the tire reinforcing member of the present invention, which is taken along a direction orthogonal to the longitudinal direction of reinforcing cords. In the present invention, it is important that carbon fiber cords having a double-twist structure with a prescribed twist structure and a prescribed twist coefficient are used as reinforcing cords 101 in a tire reinforcing member 100, and that the cord interval in the tire reinforcing member 100 is defined to be a prescribed value.

The reinforcing cords 101 according to the present invention include carbon fiber cords having a double-twist structure constituted by final-twist cords formed by further twisting plural primary-twist cords each obtained by twisting plural carbon fiber filaments. Further, in the reinforcing cords 101 according to the present invention, the following conditions are satisfied when a final twist number and a primary twist number of the carbon fiber cords are defined as "a" and "b", respectively, a total fineness of the carbon fiber cords is defined as "c", a total fineness of the primary-twist cords is defined as "d", and a cord specific gravity is defined as "C". That is, the carbon fiber cords are required to have a final twist coefficient Z₁, which is represented by Z₁ = tanθ₁ = a × √(0.125 × c/C)/1,000, in a range of 0.01 to 1.0, and the final twist coefficient Z₁ is preferably in a range of 0.01 to 0.9, more preferably 0.3 to 0.7. In addition, the carbon fiber cords are required to have a primary twist coefficient Z₂, which is represented by Z₂ = tanθ₂ = b × √(0.125 × d/C)/1,000, in a range of 0.01 to 1.0, and the primary twist coefficient Z₂ is preferably in a range of 0.01 to 0.5, more preferably 0.1 to 0.35. By using reinforcing cords having such a twist structure and twist coefficient values, a tire reinforcing member having both high rigidity and favorable fatigue durability can be obtained.

Further, in the present invention, as illustrated in FIG. 1, when the end count of the reinforcing cords 101 is defined as "A" (cords/50 mm) and the diameter of the reinforcing cords 101 is defined as "B" (mm), a cord interval Y in a direction orthogonal to the cord longitudinal direction between the reinforcing cords 101 that are adjacent to each other in the tire reinforcing member 100, which is represented by Y = (50 - A × B)/A, is in a range of 0.1 to 5 mm.

When the interval between the reinforcing cords 101 in the tire reinforcing member 100 is excessively small, the durability may be reduced due to the occurrence of local heat generation, fretting and the like; however, in the present invention, the durability is not deteriorated since the cord interval, which is specified by the relationship of the end count and the cord diameter, is defined to be in the above-described range. The cord interval Y (mm) is preferably 0.2 mm to 5 mm, more preferably 0.3 mm to 5 mm.

The tire reinforcing member 100 of the present invention may be any tire reinforcing member that employs reinforcing cords having the above-described twist structure and twist coefficient values and satisfies the above-prescribed cord interval, and this enables to attain the expected effects of the present invention.

Specific examples of carbon fibers (CF) that can be used in the carbon fiber cords of the present invention include polyacrylonitrile (PAN)-based carbon fibers, pitch-based carbon fibers, and rayon-based carbon fibers.

In the present invention, the total fineness c of the carbon fiber cords is preferably in a range of 1,000 to 30,000 dtex, more preferably in a range of 5,000 to 30,000 dtex, still more preferably in a range of 10,000 to 21,000 dtex. Meanwhile, the total fineness d of the primary-twist carbon fiber cords is preferably in a range of 300 to 10,000 dtex, more preferably in a range of 1,500 to 10,000 dtex, still more preferably in a range of 3,000 to 7,000 dtex. It is preferred to control the total fineness c of the carbon fiber cords and the total fineness d of the primary-twist cords to satisfy the above-described respective ranges since this enables to ensure a sufficient rigidity required as a tire reinforcing member. Further, in the carbon fiber cords of the present invention, the number of primary-twist cords to be twisted together may be, for example, 2 to 5.

It is preferred that the reinforcing cords 101 be treated with an adhesive so as to improve their adhesion with a rubber. This adhesive treatment can be performed in accordance with a conventional method using a commonly-used adhesive such as an RFL-based adhesive.

The tire reinforcing member of the present invention can be used as various reinforcing members in various tires. Examples of the types of the tires include tires for passenger vehicles, tires for trucks and buses, tires for construction vehicles, tires for two-wheeled vehicles, tires for airplanes, and tires for agricultural use. The tires are not restricted to be pneumatic tires, and the tire reinforcing member of the present invention can also be used as a reinforcing member of a solid tire or a non-pneumatic tire. Examples of the type of the reinforcing member include belts, carcasses, cap layered layers, chafers, and side-portion inserts of various tires. Thereamong, the tire reinforcing member of the present invention can be preferably applied as a belt of a tire for passenger vehicles or a tire for trucks and busses.

Further, the tire reinforcing member of the present invention can also be preferably used particularly in the form of the spiral cord layer described below in detail.

FIGs. 2 and 3 are a widthwise cross-sectional view and a schematic plan view that illustrate a tire reinforcing member according to another preferred embodiment of the present invention. In the illustrated tire reinforcing member 200 of the present invention includes a spiral cord layer 1 having a structure in which an upper layer 1A and a lower layer 1B are formed by spirally winding the above-described reinforcing cords 101, and the tire reinforcing member 200 thereby has high rigidity and favorable fatigue durability.

In the tire reinforcing member 200 of the present invention, the spiral cord layer 1 is formed by spirally winding a rubber-cord composite, which is obtained by parallelly arranging a single or plural (e.g., 2 to 100) reinforcing cords and coating the resultant with a rubber, in the form of a flat strip, or by spirally winding the rubber-cord composite around a core-material cord layer 2. The end count of the reinforcing cords in the spiral cord layer 1 is preferably in a range of, for example, 5 to 60 cords/50 mm.

In the tire reinforcing member 200 of the present invention, it is preferred that the reinforcing cords 101 of the spiral cord layer 1 have an inclination angle of 10° to 45° with respect to the longitudinal direction of the reinforcing member 200. By adopting this constitution, elongation of the reinforcing member 200 in the longitudinal direction can be inhibited. The inclination angle is more preferably 15° to 30°.

In the illustrated example, the spiral cord layer 1 includes the core-material cord layer 2 between the upper layer 1A and the lower layer 1B, i.e. the spiral cord layer 1 is formed by spirally winding reinforcing cords on the core-material cord layer 2; however, the present invention is not restricted to this constitution, and the core-material cord layer 2 does not have to be arranged. When the core-material cord layer 2 is arranged, it may be arranged singly, or a plurality thereof (e.g., 2 to 10) may be arranged in a laminated manner. The core-material cord layer 2 is produced by parallelly arranging a large number of core-material cords 2a and subsequently arranging an unvulcanized rubber on top and bottom thereof to coat the core-material cords 2a with the rubber. The end count of the core-material cords 2a in the core-material cord layer 2 is preferably in a range of, for example, 5 to 60 cords/50 mm.

In the tire reinforcing member 200 of the present invention, the core-material cords 2a of the core-material cord layer 2 may have an inclination angle of 40° to 90° with respect to the longitudinal direction of the core-material cord layer 2. By controlling the angle of the core-material cords 2a to be in this range, the tension of the core-material cords 2a is reduced, so that the core-material cords 2a are given an increased leeway before being fractured. This consequently makes the core-material cords 2a less likely to be fractured even when an input is applied thereto from an obstacle. In order to favorably attain this effect, the inclination angle of the core material cords 2a of the core-material cord layer 2 is more preferably 50° to 90° with respect to the longitudinal direction of the core-material cord layer 2. When plural core-material cord layers 2 are arranged, the plural core-material cord layers 2 may constitute intersecting layers.

In the tire reinforcing member 200 of the present invention, since the core-material cord layer 2 does not have high rigidity in the longitudinal direction, the reinforcing member 200 easily elongates in the longitudinal direction. However, when the core-material cords 2a of the core-material cord layer 2 have an angle of 40° to 90° with respect to the longitudinal direction, considering the reinforcing member 200 as a whole, Poisson deformation of the spiral cord layer 1 is inhibited by the core-material cord layer 2. That is, in the tire reinforcing member 200 of the present invention, by allowing the core-material cords 2a of the core-material cord layer 2 to have an angle of 40° to 90° with respect to the longitudinal direction, the core-material cord layer 2 functions as a tension rod against shrinking deformation in the width direction caused by Poisson deformation. As a result, elongation of the reinforcing member 200 in the longitudinal direction is inhibited, and the rigidity in the longitudinal direction is thus improved. In addition, with the Poisson deformation being inhibited, not only the rigidity in the longitudinal direction is improved but also shrinking deformation in the width direction is inhibited at the same time; therefore, the rigidity in the width direction is improved as well. In this manner, one or more pairs of reinforcing layers intersecting at a low angle with respect to the tire circumferential direction are elongated in the circumferential direction with application of an internal pressure and, in association therewith, the reinforcing layers shrink in the tire width direction. Inhibition of this shrinking deformation by arranging reinforcing layers at a large angle is hereinafter referred to as "tension rod effect".

In the present invention, the material of the core-material cords 2a of the core-material cord layer 2 is not particularly restricted, and various metal cords, organic fiber cords and the like that are conventionally and commonly used can be employed as appropriate. Specific examples of the metal cords that can be used include steel filaments, and steel cords obtained by twisting plural steel filaments together. Particularly, in order to favorably attain the tension rod effect, the compression rigidity in the width direction is preferably high. Therefore, twisted cords are more preferably used than monofilament cords. In this case, various designs can be adopted for the twist structure of the cords, and various cross-sectional structures, twist pitches, twist directions and distances between adjacent filaments can be employed. As the cross-sectional structures, various twist structures such as single twist, layer twist, and double-twist can be adopted, and cords having a flat cross-sectional shape can be used as well. Further, cords obtained by twisting filaments of different materials together can also be used. The steel filaments constituting the steel cords contain iron as a main component, and may further contain various trace elements, such as carbon, manganese, silicon, phosphorus, sulfur, copper, and chromium. Moreover, on the surface of the steel filaments, brass plating may be performed for improvement of the adhesion with a rubber.

As organic fibers, for example, nylon fibers, polyester fibers, rayon fibers, aramid fibers (aromatic polyamide fibers), polyketone (PK) fibers, poly-p-phenylene benzobisoxazole (PBO) fibers, and polyarylate fibers can be used. In addition, for example, carbon fibers, such as polyacrylonitrile (PAN)-based carbon fibers, pitch-based carbon fibers and rayon-based carbon fibers, as well as glass fibers and rock fibers (rock wool), such as basalt fibers and andesite fibers, can also be used. It is noted here that these reinforcing cords are preferably treated with an adhesive so as to improve their adhesion with a rubber. This adhesive treatment can be performed in accordance with a conventional method using a commonly-used adhesive such as an RFL-based adhesive. Further, hybrid cords composed of two or more kinds of the above-described fibers may be used as well. Particularly, it is preferred that the core-material cords 2a of the core-material cord layer 2 be composed of metal cords since this enables to favorably attain the tension rod effect.

In the present invention, a rubber composition used as a coating rubber of the spiral cord layer 1 and the core-material cord layer 2 is not particularly restricted, and any known rubber composition can be used. For example, as a rubber component contained in the rubber composition used as the coating rubber, any known rubber component can be used, and examples thereof include natural rubbers and synthetic rubbers, such as vinyl aromatic hydrocarbon/conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the present invention is not particularly restricted and, the rubber composition can be prepared by, for example, kneading sulfur, an organic acid cobalt salt and various additives into a rubber component using a Banbury mixer, a roll or the like in accordance with a conventional method.

In the tire reinforcing member 200 of the present invention, the thickness of the core-material cord layer 2 is preferably 1 to 3 mm, more preferably 1 to 2 mm. By controlling the thickness of the core-material cord layer 2 to be in this range, not only a core-material cord layer having sufficient compression rigidity can be applied, but also the winding radius R of the strip in the width-direction end portions of the core-material cord layer 2 at the time of winding the strip on the core-material cord layer can be ensured to be large to a certain extent, so that the winding performance of the strip material can be sufficiently ensured. Further, generally, the end count of the core-material cords 2a in the core-material cord layer is preferably in a range of 10 to 60 cords/50 mm. By controlling the end count in this range, the tension rod effect can be favorably attained; however, in the present invention, the end count is not restricted to be in this range.

Moreover, in the tire reinforcing member 200 of the present invention, it is preferred that the distance L between the core-material cords 2a at a width-direction end of the core-material cord layer 2 and the reinforcing cords 101 at a width-direction end of the spiral cord layer 1 be 0.2 to 20 times of the diameter of the core-material cords 2a of the core-material cord layer 2. By controlling the distance L in the width direction of the reinforcing member between the cut end of the core-material cords 2a constituting the core-material cord layer 2 and the reinforcing cords 101 constituting the spirally-wound spiral cord layer 1 to be 0.2 to 20 times of the diameter of the core-material cords 2a constituting the core-material cord layer 2, a reduction in durability caused by cracking from the cut end of the core-material cords 2a can be inhibited while maintaining the effect of the core-material cord layer 2 as a tension rod. In addition, since a sufficient amount of rubber exists between the core-material cords 2a and the reinforcing cords 101, the rigidity of the reinforcing member 1 in the width direction can be further improved.

The reinforcing member 200 of the present invention can be suitably used as a reinforcing member of, for example, a tire for passenger vehicles, a tire for trucks and buses, a tire for construction vehicles, a tire for two-wheeled vehicles, a tire for airplanes, and a tire for agricultural use. Further, the tire is not restricted to be a pneumatic tire, and the reinforcing member 200 of the present invention can also be used as a reinforcing member of a solid tire or a non-pneumatic tire. The part to which the reinforcing member 200 of the present invention is applied is not particularly restricted. For example, the reinforcing member 200 of the present invention is preferably applied as a belt that covers the majority of the tread portion. In the reinforcing member 200 of the present invention, as described above, not only the rigidity in the longitudinal direction but also the rigidity in the width direction are improved at the same time. Therefore, by using the reinforcing member 200 of the present invention as a belt, in addition to inhibition of interlayer separation of the belt caused by repeated input and inhibition of cord breakage caused by driving over an obstacle on the road, cracking and change over time that occur on the groove bottom can be inhibited through a reduction in the strain of the groove bottom at the time of applying an internal pressure, so that the wear rate of the tire can be reduced and partial wear of the tire can be inhibited.

Other than the use as a belt, the reinforcing member 200 of the present invention may be used only for local reinforcing of a part of the tread. The reinforcing member 200 of the present invention can be used only for local reinforcing of, for example, the vicinity of a tread end, the vicinity of the equatorial plane, or the vicinity of the groove bottom. The reinforcing member of the present invention may be used alone, or a plurality thereof may be arranged along the tire width direction or configured to cover the tread portion by spirally winding the plural reinforcing members in the circumferential direction while staggering them from one another in the tire width direction.

Next, the tire of the present invention will be described.

The tire of the present invention includes the above-described reinforcing member of the present invention and may be, for example, a tire for passenger vehicles, a tire for trucks and buses, a tire for construction vehicles, a tire for two-wheeled vehicles, a tire for airplanes, or a tire for agricultural use. The tire of the present invention is preferably a tire for passenger vehicles, a tire for trucks and buses, or a tire for construction vehicles. Further, the tire of the present invention is not restricted to be a pneumatic tire, and can be used as a solid tire or a non-pneumatic tire.

The part to which the reinforcing member of the present invention is applied is not particularly restricted, and examples thereof include a belt, a carcass, a cap layered layer, a chafer, or a tire side-portion insert. Thereamong, the tire reinforcing member of the present invention is preferably applied as, for example, a belt that covers the majority of the tread portion. By using the reinforcing member 200 of the present invention as a belt, not only cracking that occurs on the groove bottom at the time of applying an internal pressure due to a reduction in the groove bottom strain but also a change of the belt with time can be inhibited, so that the wear rate of the tire can be reduced and partial wear of the tire can be inhibited. In addition, for example, the reinforcing member of the present invention may be used only for local reinforcement of a part of the tread. The reinforcing member of the present invention can also be used only for local reinforcement of, for example, the vicinity of a tread end, the vicinity of the equatorial plane, or the vicinity of the groove bottom. The reinforcing member of the present invention may be used alone, or a plurality thereof may be arranged along the tire width direction or configured to cover the tread portion by spirally winding the plural reinforcing members in the circumferential direction while staggering them from one another in the tire width direction.

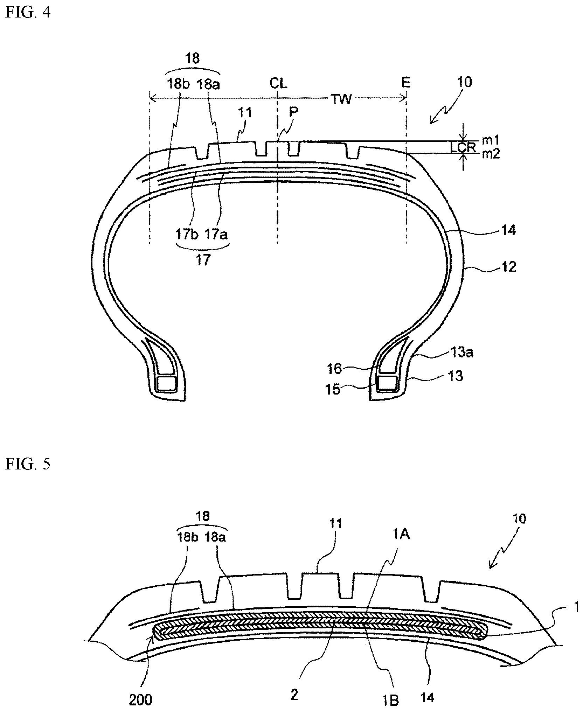

FIG. 4 is a tire widthwise cross-sectional view illustrating one example of the constitution of a tire for passenger vehicles according to the present invention. An illustrated tire 10 for passenger vehicles includes: a tread portion 11 which forms a ground-contact part; a pair of side wall portions 12 which continuously extend inward in the tire radial direction on the respective sides of the tread portion 11; and bead portions 13 which continuously extend on the circumferential inner side of each side wall portion 12. The tread portion 11, the side wall portions 12 and the bead portions 13 are reinforced by a carcass 14, which is composed of a single carcass ply toroidally extending from one bead portion 13 to the other bead portion 13. In the illustrated tire 10 for passenger vehicles, bead cores 15 are each embedded in the pair of the bead portions 13, and the carcass 14 is folded around the bead cores 15 from the inside to the outside of the tire and thereby anchored. In the present invention, the reinforcing member 100 of the present invention can be used as the carcass 14 and, in this case, as the reinforcing cords 101, it is preferred to use reinforcing cords that have a tensile elastic modulus of 5 to 30 GPa at 25°C and a tensile strength at break of 0.5 to 3 GPa at 25°C.

In the illustrated tire 10 for passenger vehicles, a belt 17 composed of two belt layers 17a and 17b is arranged on the tire radial-direction outer side of the carcass 14 in the crown region. In the present invention, the reinforcing member 100 of the present invention can be used as the belt 17 composed of the two belt layers 17a and 17b. In this case, as the reinforcing cords 101, it is preferred to use reinforcing cords that have a tensile elastic modulus of 10 to 200 GPa at 25°C and a tensile strength at break of 0.5 to 5 GPa at 25°C.

FIG. 5 is a tire widthwise partial cross-sectional view of a tread portion, illustrating another example of the constitution of a tire for passenger vehicles according to the present invention. In the illustrated tire 10 for passenger vehicles, three reinforcing layers according to the reinforcing member 200 of the present invention are arranged in place of the two belt layers 17a and 17b on the tire radial-direction outer side of the carcass 14 in the crown region. In other words, the spiral cord layer 1 of the reinforcing member 200 of the present invention constitutes intersecting belt layers in which cord layers each having a prescribed angle with respect to the tire circumferential direction intersect with each other between the belt layers. Further, the core-material cord layer 2 constitutes a second belt layer. In this case, as the reinforcing cords 101, it is preferred to use reinforcing cords that have a tensile elastic modulus of 10 to 250 GPa at 25°C and a tensile strength at break of 0.5 to 5 GPa at 25°C.

In the tire of the present invention, in both of the case of applying the reinforcing member 100 of the present invention to the carcass 14, the ordinary belt 17 and the like and the case of applying the reinforcing member 200 of the present invention in place of the belt 17, a tire performance-improving effect can be obtained because of these reinforcing members having high rigidity and excellent fatigue durability. The tire of the present invention can be configured in accordance with a conventional method, without any particular restriction on those points other than the use of the above-described reinforcing members of the present invention.

In the tire 10 for passenger vehicles according to the present invention, a variety of constitutions including conventional structures can be adopted for the carcass 14, and the carcass 14 may have a radial structure or a bias structure. Usually, the carcass 14 is preferably constituted by one or two carcass plies each composed of an organic fiber cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the tire radial-direction outer side with respect to the tire height. Moreover, as illustrated, the carcass 14 is generally and preferably configured to extend between the pair of the bead cores 15 without interruption; however, the carcass 14 can also be constituted by a pair of carcass ply pieces (not illustrated) that extend from the respective bead cores 15 and are interrupted in the vicinity of the tread portion 11.

A variety of structures can be adopted for the folded parts of the carcass 14. For example, the folded ends of the carcass 14 can be positioned on the tire radial-direction inner side than the upper ends of bead fillers 16, and the folded ends of the carcass 14 may extend further on the tire radial-direction outer side than the upper ends of the bead fillers 16 or the tire maximum-width positions. In this case, the folded ends of the carcass 14 may extend further on the tire width-direction inner side than the tire width-direction ends of the belt 17. Further, in cases where the carcass 14 is constituted by plural carcass plies, the positions of the folded ends of the carcass 14 along the tire radial direction may be different from each other. Alternatively, the carcass 14 may take a structure in which the carcass 14 is sandwiched by plural bead core members or wound around the bead cores 15, without any folded part. The end count of the carcass 14 is generally in a range of 10 to 60 cords/50 mm; however, the end count is not restricted thereto.

In the tire 10 for passenger vehicles according to the present invention, the belt 17 is formed by rubber-coating plural belt cords that are arranged in parallel at an inclination angle of 10° to 45° with respect to the tire circumferential direction, and the belt 17 is usually arranged in two to more layers such that their cord directions intersect with one another. As the belt cords, usually, steel cords or organic fiber cords made of polyester, rayon, nylon, or the like can be used. The end count of the belt 17 is generally in a range of 10 to 60 cords/50 mm; however, the end count is not restricted thereto.

The tire 10 for passenger vehicles according to the present invention may further include other belt layer(s) (not illustrated) in addition to the belt 17 or the reinforcing member of the present invention. Such other belt layers may be inclined belts which are each composed of a rubberized layer of reinforcing cords and have a prescribed angle with respect to the tire circumferential direction. The other belt layers may be arranged on the tire radial-direction outer side or inner side of the belt 17 or the reinforcing member of the present invention. As the reinforcing cords of such inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can be used. The cross-sectional structure thereof is not particularly restricted, and various twist structures such as single twist, layer twist and double-twist can be adopted. The inclination angle of the reinforcing cords of the other belt layers is preferably 10° or larger with respect to the tire circumferential direction. Moreover, in cases where such other belt layers are arranged, the width of a maximum-width inclined belt layer having the largest width is preferably 90% to 115%, particularly preferably 100% to 105%, of the tread width.

In the tire for passenger vehicles according to the present invention, a belt reinforcing layer 18 may also be arranged on the tire radial-direction outer side of the belt 17 or the reinforcing member of the present invention. Examples of the belt reinforcing layer 18 include a cap layer 18a which is arranged over the entire width or more of the belt 17 or the reinforcing member, and a layered layer 18b which is arranged in the regions that cover the respective ends of the belt 17 or the reinforcing member. The cap layer 18a and the layered layer 18b may each be arranged alone, or both of them may be arranged in combination. Alternatively, the belt reinforcing layer 18 may be a combination of two or more cap layers and/or two or more layered layers.

Various materials can be used as the reinforcing cords of the cap layer 18a and the layered layer 18b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting plural filaments together, or hybrid cords obtained by twisting filaments of different materials together can be used as well. Further, in order to increase the breaking strength, wavy cords may be used as the reinforcing cords. Similarly, in order to increase the breaking strength, for example, high-elongation cords having an elongation at break of 4.5% to 5.5% may be used. Moreover, in the present invention, the reinforcing member 100 of the present invention can be used as the cap layer 18a and the layered layer 18b and, in this case, as the reinforcing cords 101, it is preferred to use reinforcing cords that have a tensile elastic modulus of 5 to 150 GPa at 25°C and a tensile strength at break of 0.5 to 3 GPa at 25°C.

In cases where the cap layer 18a is arranged in the tire 10 for passenger vehicles according to the present invention, the width of the cap layer 18a may be wider or narrower than the inclined belt layers. For example, the width of the cap layer 18a can be 90% to 110% of the width of the maximum-width inclined belt layer having the largest width among the inclined belt layers. The end count of the cap layer and that of the layered layer are generally in a range of 20 to 60 cords/50 mm; however, the end counts are not restricted thereto. For example, the cap layer 18a may be imparted with distribution in the tire width direction in terms of rigidity, material, number of layers, cord density and the like and, for example, the number of layers can be increased only in the tire width-direction end portions, or only in the central part.

From the production standpoint, it is particularly advantageous to configure the cap layer 18a and the layered layer 18b as spiral layers. In this case, these layers may be constituted by strip-form cords in which plural core wires arranged in parallel to each other in a plane are bundled together by a wrapping wire with the parallel arrangement being maintained.

With regard to the shape of the tread portion 11 in the tire 10 for passenger vehicles according to the present invention that has a narrow width and a large diameter, when, at a tire widthwise cross-section, a straight line that runs through a point P on the tread surface in the tire equatorial plane CL and is parallel to the tire width direction is defined as "m1", a straight line that runs through a ground-contact end E and is parallel to the tire width direction is defined as "m2", the distance between the straight lines m1 and m2 in the tire radial direction is defined as fall height "LCR" and the tread width of the tire is defined as "TW", a ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced, and the durability and the wear resistance of the tire can be improved. Further, the tread ends are preferably smooth.

A tread pattern may be a full-lug pattern, a pattern mainly constituted by rib-like land portions, a block pattern or an asymmetrical pattern, and the tread pattern may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The pattern mainly constituted by rib-like land portions is a pattern which is mainly constituted by rib-like land portions that are partitioned in the tire width direction by at least one circumferential groove, or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern with no lateral groove. In such a pattern, the drainage performance in this region largely contributes to the wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

A tread rubber is not particularly restricted, and any conventionally used rubber or a foamed rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 10 for passenger vehicles according to the present invention, a known structure can be adopted also for the side wall portions 12. For example, the tire maximum-width positions can be arranged in a range of 50% to 90% from each bead base on the tire radial-direction outer side with respect to the tire height. Further, a structure including a rim guard may be adopted as well. In the tire 10 for passenger vehicles according to the present invention, it is preferred that a recess 13a, which comes into contact with the rim flange, be formed.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by plural bead core members. In the illustrated tire 10 for passenger vehicles, bead fillers 16 are arranged on the tire radial-direction outer side of the respective bead cores 15; however, the bead fillers 16 may be omitted in the tire 10 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer containing a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for the inhibition of air leakage upon puncture of the tire may be arranged as well.

The use of the tire 10 for passenger vehicles is not particularly restricted. The tire 10 can be suitably used as a summer tire, an all-season tire, or a winter tire. It is also possible to use the tire 10 as a tire for passenger vehicles that has a special structure, such as a side-reinforced run-flat tire having a crescent-shaped reinforcing rubber layer in the side wall portions 12, or a studded tire.

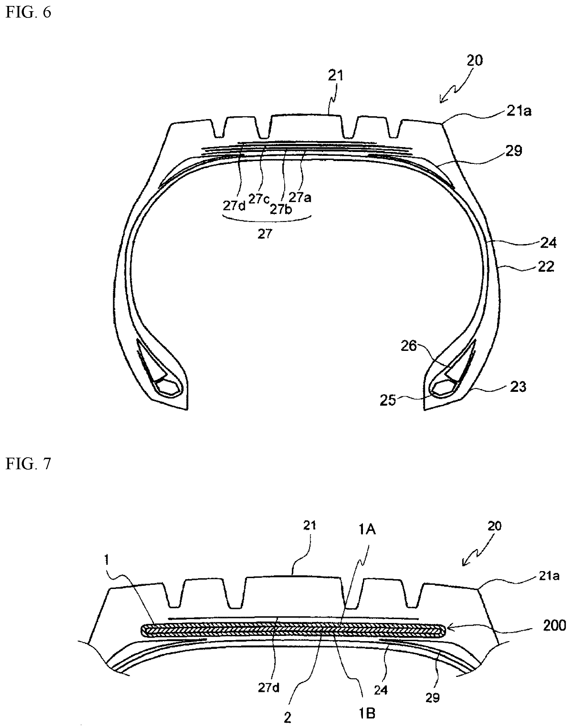

FIG. 6 is a tire widthwise cross-sectional view illustrating one example of the constitution of the tire for trucks and buses according to the present invention. An illustrated tire 20 for trucks and buses includes: a tread portion 21 which forms a ground-contact part; a pair of side wall portions 22 which continuously extend inward in the tire radial direction on the respective sides of the tread portion 21; and bead portions 23 which continuously extend on the circumferential inner side of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for trucks and buses, bead cores 25 are each embedded in the pair of the bead portions 23, and the carcass 24 is folded around the bead cores 25 from the inside to the outside of the tire and thereby anchored. In the present invention, the reinforcing member 100 of the present invention can be used as the carcass 24 and, in this case, as the reinforcing cords 101, it is preferred to use reinforcing cords that have a tensile elastic modulus of 10 to 250 GPa at 25°C and a tensile strength at break of 0.5 to 5 GPa at 25°C.

In the illustrated tire 20 for trucks and buses, a belt 27 composed of four belt layers 27a to 27d is arranged on the tire radial-direction outer side of the carcass 24 in the crown region. In the present invention, the reinforcing member 100 of the present invention can be used as the belt 27 composed of the four belt layers 27a to 27d. In this case, as the reinforcing cords 101, it is preferred to use reinforcing cords that have a tensile elastic modulus of 10 to 250 GPa at 25°C and a tensile strength at break of 0.5 to 5 GPa at 25°C.

FIG. 7 is a tire widthwise partial cross-sectional view of a tread portion, illustrating another example of the constitution of a tire for trucks and buses according to the present invention. In the illustrated tire 20 for trucks and buses, the reinforcing member 200 can be arranged in place of, among the four belt layers 27a to 27d, a first belt layer 27a to a third belt layer 27c that are positioned on the tire radial-direction inner side. In other words, the spiral cord layer 1 of the reinforcing member 200 of the present invention constitutes the first belt layer 27a and the third belt layer 27c, which are intersecting belts in which cord layers each having a prescribed angle with respect to the tire circumferential direction intersect with each other between the belt layers. Further, the core-material cord layer 2 constitutes a second belt layer 27b. In this case, as the reinforcing cords 101, it is preferred to use reinforcing cords that have a tensile elastic modulus of 10 to 250 GPa at 25°C and a tensile strength at break of 0.5 to 5 GPa at 25°C.

In the tire of the present invention, in both of the case of applying the reinforcing member 100 of the present invention to the carcass 24, the ordinary belt layers 27a to 27d and the like and the case of applying the reinforcing member 200 of the present invention in place of some of the belt layers 27a to 27d, a tire performance-improving effect can be obtained because of these reinforcing members having high rigidity and excellent fatigue durability. The tire of the present invention can be configured in accordance with a conventional method, without any particular restriction on those points other than the use of the above-described reinforcing members of the present invention.

In the tire 20 for trucks and buses according to the present invention, a variety of constitutions including conventional structures can be adopted for the carcass 24, and the carcass 24 may have a radial structure or a bias structure. Usually, the carcass 24 is preferably constituted by one or two carcass plies each composed of a steel cord. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the tire radial-direction outer side with respect to the tire height. Moreover, as illustrated, the carcass 24 is generally and preferably configured to extend between the pair of the bead cores 25 without interruption; however, the carcass 24 can also be constituted by a pair of carcass pieces that extend from the respective bead cores 25 and are interrupted in the vicinity of the tread portion 21.

A variety of structures can be adopted for the folded parts of the carcass 24. For example, the folded ends of the carcass 24 can be positioned on the tire radial-direction inner side than the upper ends of bead fillers 26, and the carcass folded ends may extend further on the tire radial-direction outer side than the upper ends of the bead fillers 26 or the tire maximum-width positions. In this case, the folded ends of the carcass 24 may extend further on the tire width-direction inner side than the tire width-direction ends of the belt 27. Further, in cases where plural carcass plys are arranged, the positions of the folded ends of the carcass 24 in the tire radial direction may be different from each other. Alternatively, the carcass 24 may take a structure in which the carcass 24 is sandwiched by plural bead core members or wound around the bead cores 25, without any folded part. The end count of the carcass 24 is generally in a range of 10 to 60 cords/50 mm; however, the end count is not restricted thereto.

In the tire 20 for trucks and buses according to the present invention, the belt 27 is formed by rubber-coating plural belt cords that are arranged in parallel at an inclination angle of 10° to 45° with respect to the tire circumferential direction, and the belt 27 is usually arranged in two to four layers such that cord directions intersect with one another at least between some of the layers. As the belt cords, usually, steel cords or organic fiber cords made of polyester, rayon, nylon, or the like can be used. The end count of the belt 27 is generally in a range of 10 to 60 cords/50 mm; however, the end count is not restricted thereto.

The tire 20 for trucks and buses according to the present invention may further include, as illustrated in FIG. 7, other belt layer(s) (a fourth belt layer 27d in the illustrated example) in addition to the belt layers composed of the reinforcing member 200 of the present invention. Such other belt layers may be inclined belts which are each composed of a rubberized layer of reinforcing cords and have a prescribed angle with respect to the tire circumferential direction. As the reinforcing cords of such inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can be used. The cross-sectional structure thereof is not particularly restricted, and various twist structures such as single twist, layer twist and double-twist can be adopted. The inclination angle of the reinforcing cords of the other belt layers is preferably 0° or larger with respect to the tire circumferential direction. Moreover, in cases where such other belt layers are arranged, the width of a maximum-width inclined belt layer having the largest width is preferably 40% to 115%, particularly preferably 50% to 70%, of the tread width. On the tire radial-direction inner side of each end of the belt 27, it is preferred to arrange a belt under-cushion rubber 29. By this, strain and temperature applied to the ends of the belt 27 are reduced, so that the tire durability can be improved.

In the tire 20 for trucks and buses according to the present invention, a circumferential cord layer (not illustrated) may also be arranged on the tire radial-direction outer side of the reinforcing member 100 of the present invention and other belt layer 27d, or the reinforcing member 200 of the present invention.

In the tire 20 for trucks and buses according to the present invention, a known structure can be adopted also for the side wall portions 22. For example, the tire maximum-width positions can be arranged in a range of 50% to 90% from each bead base on the tire radial-direction outer side with respect to the tire height. In the tire 20 for trucks and buses according to the present invention, it is preferred that the side wall portions 22 be each formed as a smooth curve having a convex shape in the tire width direction without a recess that comes into contact with the rim flange, which is different from a tire for passenger vehicles.

Moreover, a variety of structures, such as a circular shape and a polygonal shape, can be adopted for the bead cores 25. It is noted here that, as described above, the bead portions 22 may have a structure in which the carcass 24 is wound on the bead cores 25, or a structure in which the carcass 24 is sandwiched by plural bead core members. In the illustrated tire 20 for trucks and buses, bead fillers 26 are arranged on the tire radial-direction outer side of the respective bead cores 25, and the bead fillers 26 may each be constituted by plural rubber members that are separated from each other in the tire radial direction.

In the tire 20 for trucks and buses according to the present invention, a tread pattern may be a pattern mainly constituted by rib-like land portions, a block pattern or an asymmetrical pattern, and the tread pattern may have a designated rotation direction.

The pattern mainly constituted by rib-like land portions is a pattern which is mainly constituted by rib-like land portions that are partitioned in the tire width direction by at least one circumferential groove, or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern with no lateral groove. In such a pattern, the drainage performance in this region largely contributes to the wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

A tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings. Further, in the tread portion, it is preferred that a corner 21a be formed at each tire width-direction end.

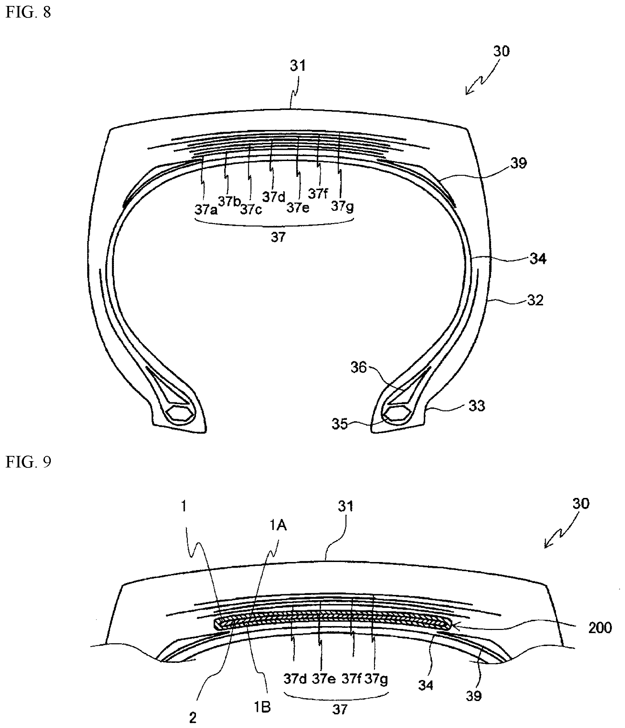

FIG. 8 is a tire widthwise cross-sectional view illustrating one example of the constitution of a tire for construction vehicles according to the present invention. An illustrated tire 30 for construction vehicles according to the present invention include: a tread portion 31 which forms a ground-contact part; a pair of side wall portions 32 which continuously extend inward in the tire radial direction on the respective sides of the tread portion 31; and bead portions 33 which continuously extend on the circumferential inner side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored. In the present invention, the reinforcing member 100 of the present invention can be used as the carcass 34 and, in this case, as the reinforcing cords 101, it is preferred to use reinforcing cords that have a tensile elastic modulus of 10 to 250 GPa at 25°C and a tensile strength at break of 0.5 to 5 GPa at 25°C.

In the illustrated tire 30 for construction vehicles, a belt 37 composed of seven belt layers 37a to 37g is arranged on the tire radial-direction outer side of the carcass 34 in the crown region. In the present invention, the reinforcing member 100 of the present invention can be used as the belt 37 composed of the seven belt layers 37a to 37g. In this case, as the reinforcing cords 101, it is preferred to use reinforcing cords that have a tensile elastic modulus of 10 to 250 GPa at 25°C and a tensile strength at break of 0.5 to 5 GPa at 25°C.

FIG. 9 is a tire widthwise partial cross-sectional view of a tread portion, illustrating another example of the constitution of a tire for construction vehicles according to the present invention. Generally, a tire for construction vehicles includes 4 to 6 belt layers and, when the tire for construction vehicles includes 6 belt layers, first and second belt layers constitute an inner intersecting belt layer group; third and fourth belt layers constitute a middle intersecting belt layer group; and fifth and sixth belt layers constitute an outer intersecting belt layer group. The tire for construction vehicles according to the present invention has a structure in which at least one of the inner, middle and outer intersecting belt layer groups is replaced with the reinforcing member of the present invention. In the illustrated tire 30 for construction vehicles, the reinforcing member 200 of the present invention is arranged in place of the first belt layer 37a to the third belt layer 37c that constitute the inner intersecting belt layer group.

In other words, the spiral cord layer 1 of the reinforcing member 200 of the present invention constitutes the first belt layer 37a and the third belt layer 37c, which are intersecting belts in which cord layers each having a prescribed angle with respect to the tire circumferential direction intersect with each other between the belt layers. Further, the core-material cord layer 2 constitutes the second belt layer 37b. In the illustrated example, the inner intersecting belt layer group is replaced with the reinforcing member 200 of the present invention; however, the tire for construction vehicles according to the present invention is not restricted to this constitution. The middle intersecting belt layer group may be replaced with the reinforcing member 200 of the present invention, or the outer intersecting belt layer group may be replaced with the reinforcing member 200 of the present invention. In the case of a tire for construction vehicles that includes four belt layers, the first and the second belt layers may be replaced with the reinforcing member of the present invention, or the third and the fourth belt layers may be replaced with the reinforcing member of the present invention. In this case, as the reinforcing cords 101, it is preferred to use reinforcing cords that have a tensile elastic modulus of 10 to 250 GPa at 25°C and a tensile strength at break of 0.5 to 5 GPa at 25°C.

In the tire of the present invention, in both of the case of applying the reinforcing member 100 of the present invention to the carcass 34, the ordinary belt 37 and the like and the case of applying the reinforcing member 200 of the present invention in place of a part of the belt 37, a tire performance-improving effect can be obtained because of these reinforcing members having high rigidity and excellent fatigue durability. The tire of the present invention can be configured in accordance with a conventional method, without any particular restriction on those points other than the use of the above-described reinforcing members of the present invention.

In the tread width direction, the width of the inner intersecting belt layer group can be 25% to 70% of the width of the tread surface; the width of the middle intersecting belt layer group can be 55% to 90% of the width of the tread surface; and the width of the outer intersecting belt layer group can be 60% to 110% of the width of the tread surface. Further, in a tread planar view, the inclination angle of the belt cords of the inner intersecting belt layer group can be 70° to 85° with respect to the carcass cords; the inclination angle of the belt cords of the middle intersecting belt layer group can be 50° to 75° with respect to the carcass cords; and the inclination angle of the belt cords of the outer intersecting belt layer group can be 70° to 85° with respect to the carcass cords.

In the tire for construction vehicles according to the present invention, a variety of constitutions including conventional structures can be adopted for the carcass 34, and the carcass 34 may have a radial structure or a bias structure. Usually, the carcass 34 is preferably constituted by one or two carcass plies each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the tire radial-direction outer side with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the tire radial-direction inner side than the upper ends of bead fillers 36, and the folded ends of the carcass 34 may extend further on the tire radial-direction outer side than the upper ends of the bead fillers 36 or the tire maximum-width positions. In this case, the folded ends of the carcass 34 may extend further on the tire width-direction inner side than the tire width-direction ends of the belt 37. Further, in cases where plural carcass plys are arranged, the positions of the folded ends of the carcass 34 in the tire radial direction may be different from each other. Alternatively, the carcass 34 may take a structure in which the carcass 34 is sandwiched by plural bead core members or wound around the bead cores 35, without any folded part. The end count of the carcass 34 is generally in a range of 1 to 60 cords/50 mm; however, the end count is not restricted thereto.

In the tire 30 for construction vehicles according to the present invention, as belt cords of the belt 37, usually, steel cords or organic fiber cords made of polyester, rayon, nylon, or the like can be used. The end count of the belt 37 is generally in a range of 1 to 60 cords/50 mm; however, the end count is not restricted thereto.

The tire 30 for construction vehicles according to the present invention may further include, as illustrated in FIG. 9, other belt layers (fourth to seventh belt layers) in addition to the reinforcing member 200 of the present invention. Such other belt layers may be inclined belts which are each composed of a rubberized layer of reinforcing cords and have a prescribed angle with respect to the tire circumferential direction. As the reinforcing cords of such inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can be used. The cross-sectional structure thereof is not particularly restricted, and various twist structures such as single twist, layer twist and double-twist can be adopted. The inclination angle of the reinforcing cords of the other belt layers is preferably 10° or larger with respect to the tire circumferential direction. Moreover, in cases where such other belt layers are arranged, the width of a maximum-width inclined belt layer having the largest width is preferably 90% to 115%, particularly preferably 100% to 105%, of the tread width. On the tire radial-direction inner side of each end of the belt 37, it is preferred to arrange a belt under-cushion rubber 39. By this, strain and temperature applied to the ends of the belt 37 are reduced, so that the tire durability can be improved.

In the tire 30 for construction vehicles according to the present invention, a known structure can be adopted also for the side wall portions 32. For example, the tire maximum-width positions can be arranged in a range of 50% to 90% from each bead base on the tire radial-direction outer side with respect to the tire height. In the tire 30 for construction vehicles according to the present invention, it is preferred that a recess, which comes into contact with the rim flange, be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by plural bead core members. In the illustrated tire 30 for construction vehicles, bead fillers 36 are arranged on the tire radial-direction outer side of the respective bead cores 35, and the bead fillers 36 may each be constituted by plural rubber members that are separated from each other in the tire radial direction.

In the tire 30 for construction vehicles according to the present invention, a tread pattern may be a lug pattern, a block pattern or an asymmetrical pattern, and the tread pattern may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern including block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

A tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 30 for construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of Examples thereof.

In accordance with the conditions shown in Tables 1 to 3 below, reinforcing cords composed of carbon fiber cords having a double-twist structure constituted by final-twist cords formed by further twisting plural primary-twist cords each obtained by twisting plural carbon fiber filaments (PAN-based carbon fibers, specific gravity = 1.74) are prepared. It is noted here that, in Comparative Example 1, carbon fiber cords having a single-twist structure constituted by final-twist cords formed by twisting plural carbon fiber filaments (PAN-based carbon fibers, specific gravity = 1.74) are used. Using the thus obtained reinforcing cords, tire reinforcing members of Examples and Comparative Examples are each produced.

Tires for passenger vehicles, in which a belt composed of two belt layers using each tire reinforcing member of Examples and Comparative Examples is arranged at an angle of ± 70° with respect to the tire circumferential direction on the tire radial-direction outer side of a carcass in the crown portion, are produced at a tire size of 195/65R15.

### <Fatigue Durability>

The fatigue durability is evaluated as follows.

The thus obtained test tires are each mounted on an application rim and subsequently subjected to 50,000-km running at a speed of 80 km/h under a prescribed internal pressure and a prescribed load, after which the reinforcing cords are removed from each tire to measure the strength reduction rate. The thus obtained results are presented as index values, taking the measured value of Comparative Example 1 as 100. A larger index value indicates superior fatigue durability.

The term "application rim" used herein refers to a rim defined in the below-described standard according to the tire size. The term "prescribed internal pressure" refers to an air pressure that is defined in the below-described standard according to the maximum load capacity, and the term "prescribed load" refers to the maximum mass that is allowable on a tire as defined in the below-described standard. Further, the term "standard" used herein refers to an industrial standard that is valid in each region where the tire is manufactured or used, such as "The Tire and Rim Association Inc. Year Book" in the U.S., "The European Tyre and Rim Technical Organisation Standard Manual" in Europe, or "JATMA Year Book" of Japan Automobile Tyre Manufacturers Association in Japan.

### <Tensile Elastic Modulus and Tensile Strength at Break of Reinforcing Cords>

The test tires of Examples and Comparative Examples are each dissected to remove the belt reinforcing cords, and the tensile elastic modulus and the tensile strength at break are measured at 25°C in accordance with JIS L1017.

The results thereof are shown together in Tables below.

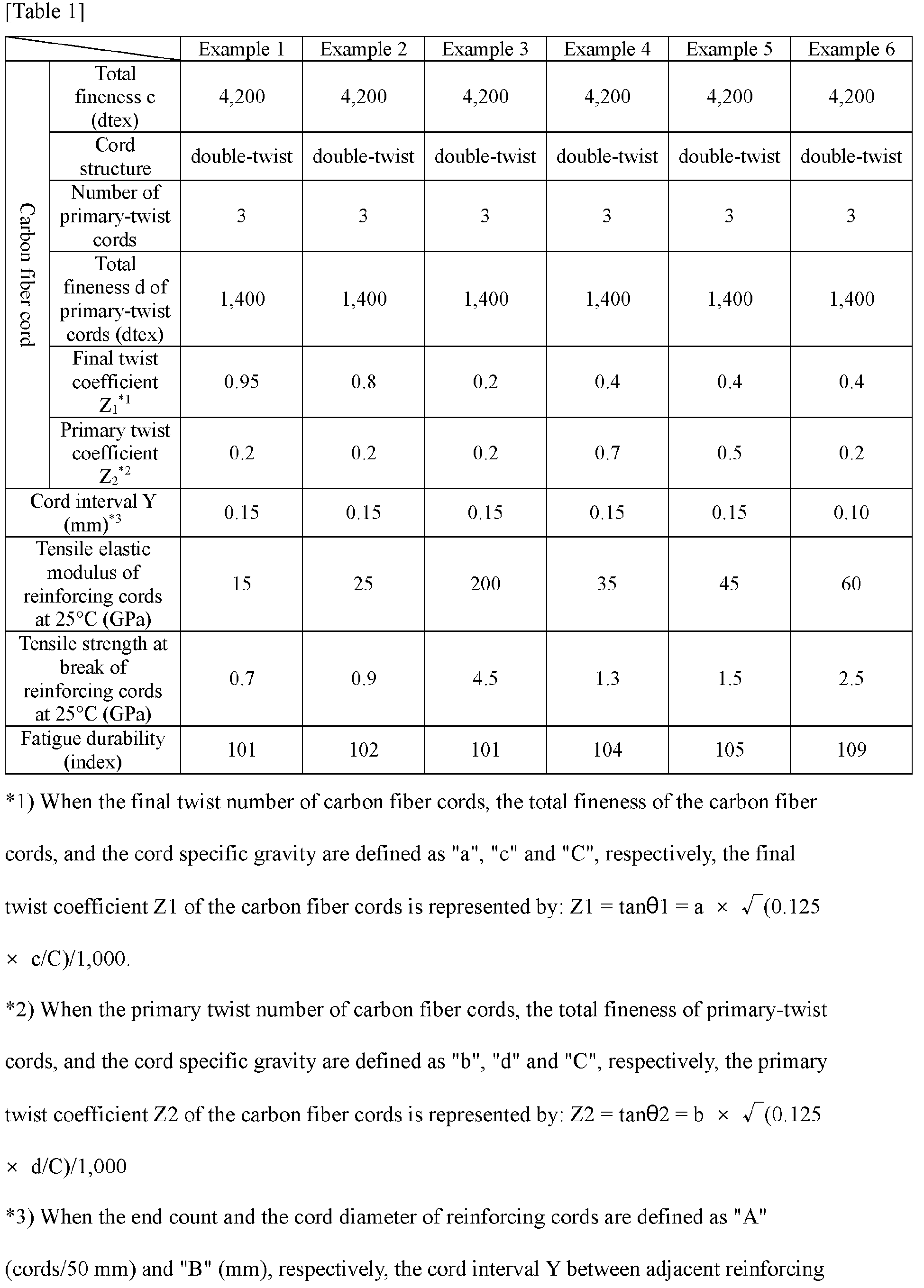

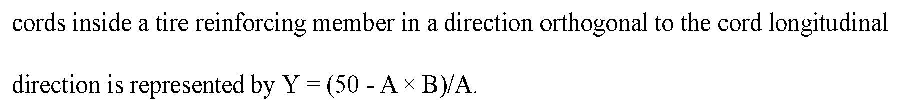

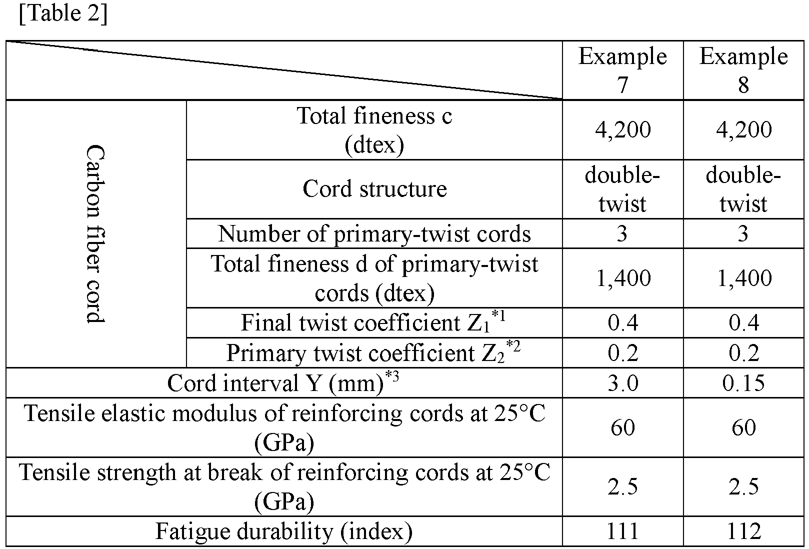

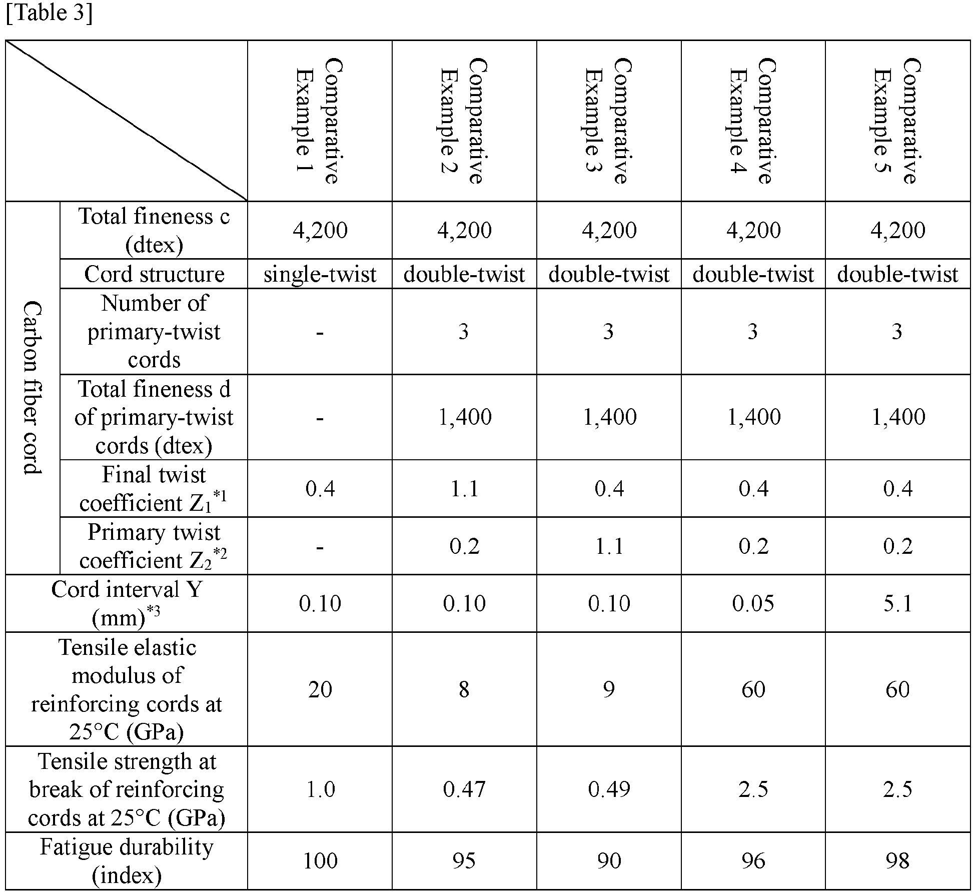

In accordance with the conditions shown in Tables 4 and 5 below, reinforcing cords of Examples 9 and 17 composed of carbon fiber cords having a double-twist structure constituted by final-twist cords formed by further twisting plural primary-twist cords each obtained by twisting plural carbon fiber filaments (PAN-based carbon fibers, specific gravity = 1.74), were prepared. Using the thus obtained reinforcing cords, tire reinforcing members of Examples 9 and 17 were each produced.

Tires for trucks and buses, in which, on the tire radial-direction outer side of a carcass in the crown portion, belts using each tire reinforcing member of Examples 9 and 17 were arranged as intersecting layers having an angle of 16° with respect to the tire circumferential direction in second and third layers of a belt constituted by four belt layers, were produced at a tire size of 275/80R22.5.

For the thus obtained test tires of Examples 9 and 17, the fatigue durability as well as the tensile elastic modulus and the tensile strength at break of the reinforcing cords were evaluated. Further, with regard to other Examples and Comparative Examples shown in Tables 4 to 6 below, values that would be obtained by evaluating the respective evaluation items in the same manner as in Examples 9 and 17 were predicted. It is noted here that the carbon fiber cords of Comparative Example 6 are those having a single-twist structure constituted by final-twist cords formed by twisting plural carbon fiber filaments (PAN-based carbon fibers, specific gravity = 1.74).

### <Fatigue Durability>

The fatigue durability was evaluated as follows.

The thus obtained test tires of Examples 9 and 17 were each mounted on an application rim and subsequently subjected to 50,000-km running at a speed of 80 km/h under a prescribed internal pressure and a prescribed load, after which the reinforcing cords were removed from each tire to measure the strength reduction rate. The thus obtained results are presented as index values, taking the measured value of Comparative Example 6 as 100. A larger index value indicates superior fatigue durability.

### <Tensile Elastic Modulus and Tensile Strength at Break of Reinforcing Cords>

The test tires of Examples 9 and 17 were each dissected to remove the belt reinforcing cords, and the tensile elastic modulus and the tensile strength at break were measured at 25°C in accordance with JIS L1017.

The results thereof are shown together in Tables below.

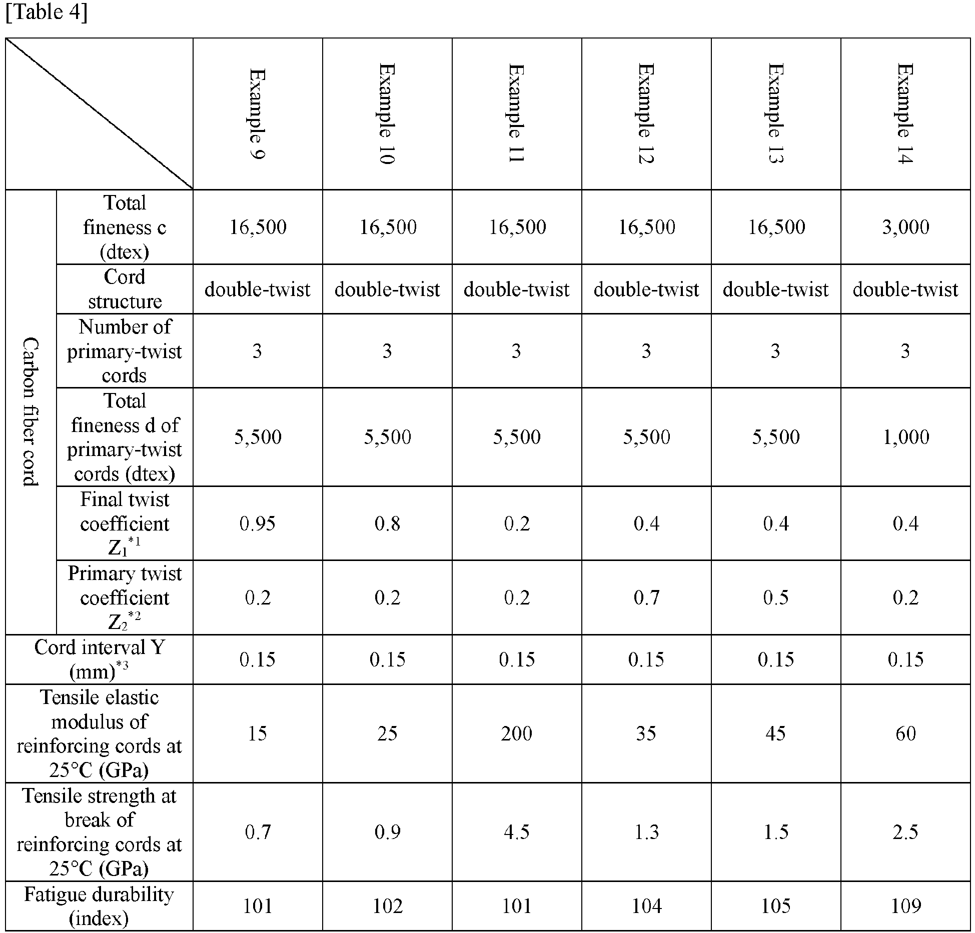

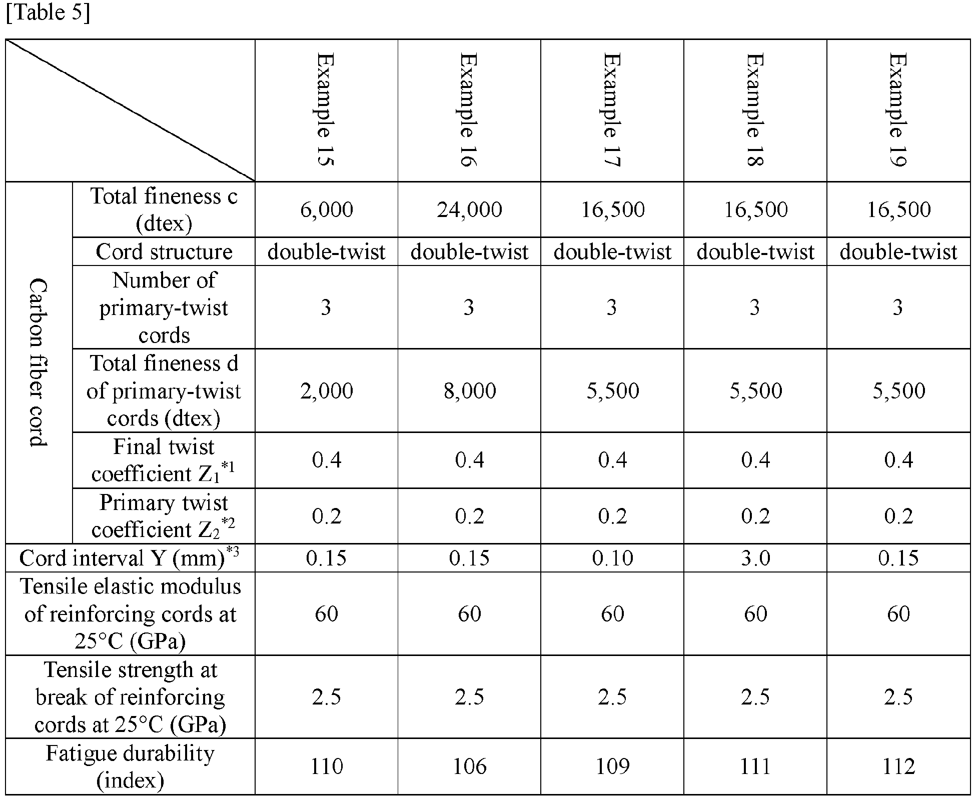

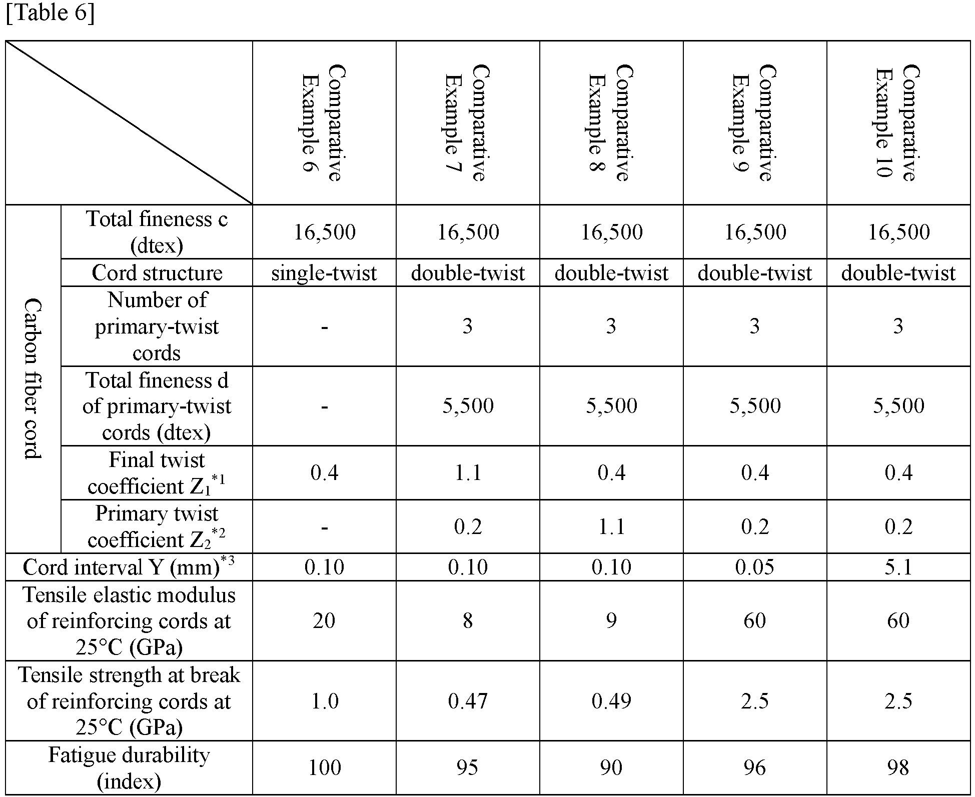

In accordance with the conditions shown in Tables 7 to 9 below, reinforcing cords composed of carbon fiber cords having a double-twist structure constituted by final-twist cords formed by further twisting plural primary-twist cords each obtained by twisting plural carbon fiber filaments (PAN-based carbon fibers, specific gravity = 1.74) are prepared. It is noted here that, in Comparative Example 11, carbon fiber cords having a single-twist structure constituted by final-twist cords formed by twisting plural carbon fiber filaments (PAN-based carbon fibers, specific gravity = 1.74) are used. Using a rubber-cord composite in which six of the thus obtained reinforcing cords are arranged in parallel and coated with a rubber, tire reinforcing members of Examples and Comparative Examples are each produced.

The reinforcing members of Examples and Comparative Examples are each produced by spirally winding the above-described rubber-cord composite around a single core-material cord layer and thereby forming a spiral cord layer. As core-material cords of the core-material cord layer, steel cords having a 1×3 structure composed of steel filaments of 0.33 mm in diameter are used. The end count of the core-material cords in the core-material cord layer is 25 cords/50 mm, the inclination angle of the core-material cord layer is 50° with respect to the longitudinal direction, and the core-material cord layer has a thickness of 2 mm. Further, the inclination angle of the reinforcing cords of the spiral cord layer is set at 16° with respect to the longitudinal direction of the core-material cord layer.

Tires for trucks and buses, in which each tire reinforcing member of Examples and Comparative Examples is arranged on the tire radial-direction outer side of a carcass in the crown portion in place of the first to the third layers from the inner side of a belt constituted by four belt layers, are produced at a tire size of 275/80R22.5.

### <Fatigue Durability>

The fatigue durability is evaluated as follows.

The thus obtained test tires are each mounted on an application rim and subsequently subjected to 50,000-km running at a speed of 80 km/h under a prescribed internal pressure and a prescribed load, after which the reinforcing cords are removed from each tire to measure the strength reduction rate. The thus obtained results are presented as index values, taking the measured value of Comparative Example 11 as 100. A larger index value indicates superior fatigue durability.

### <Tensile Elastic Modulus and Tensile Strength at Break of Reinforcing Cords>

The test tires of Examples and Comparative Examples are each dissected to remove the reinforcing cords from each reinforcing member, and the tensile elastic modulus and the tensile strength at break are measured at 25°C in accordance with JIS L1017.

The results thereof are shown together in Tables below.

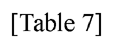

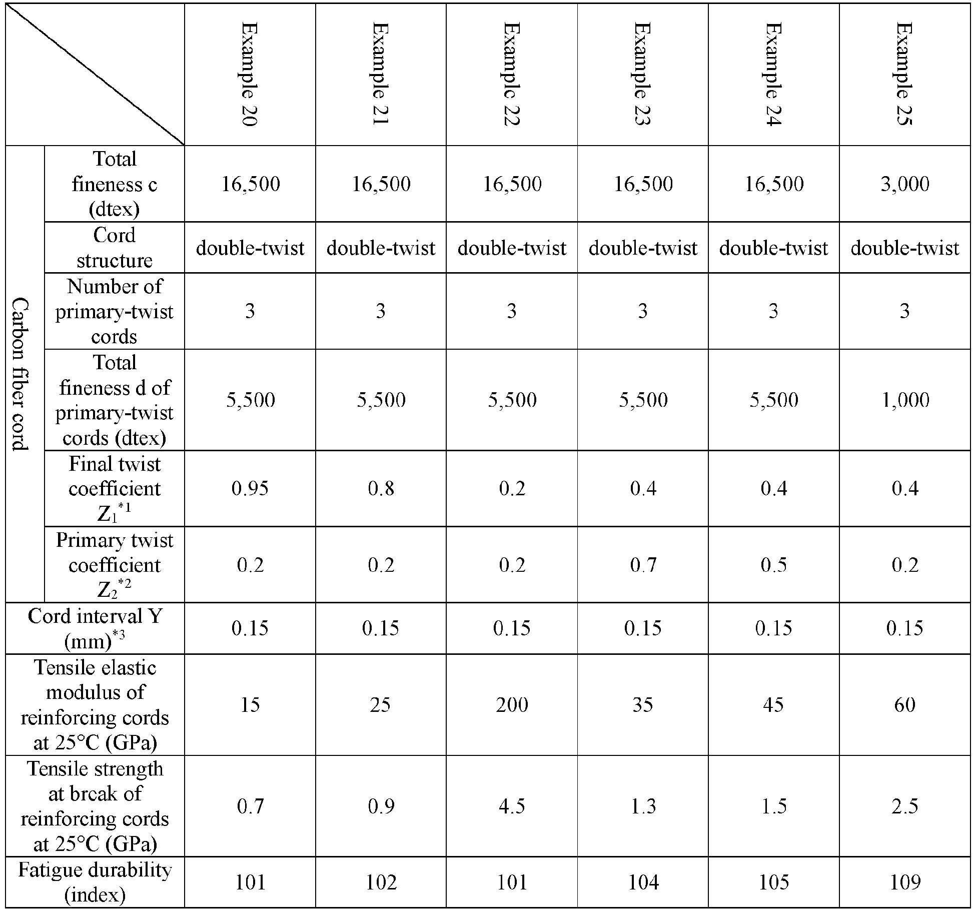

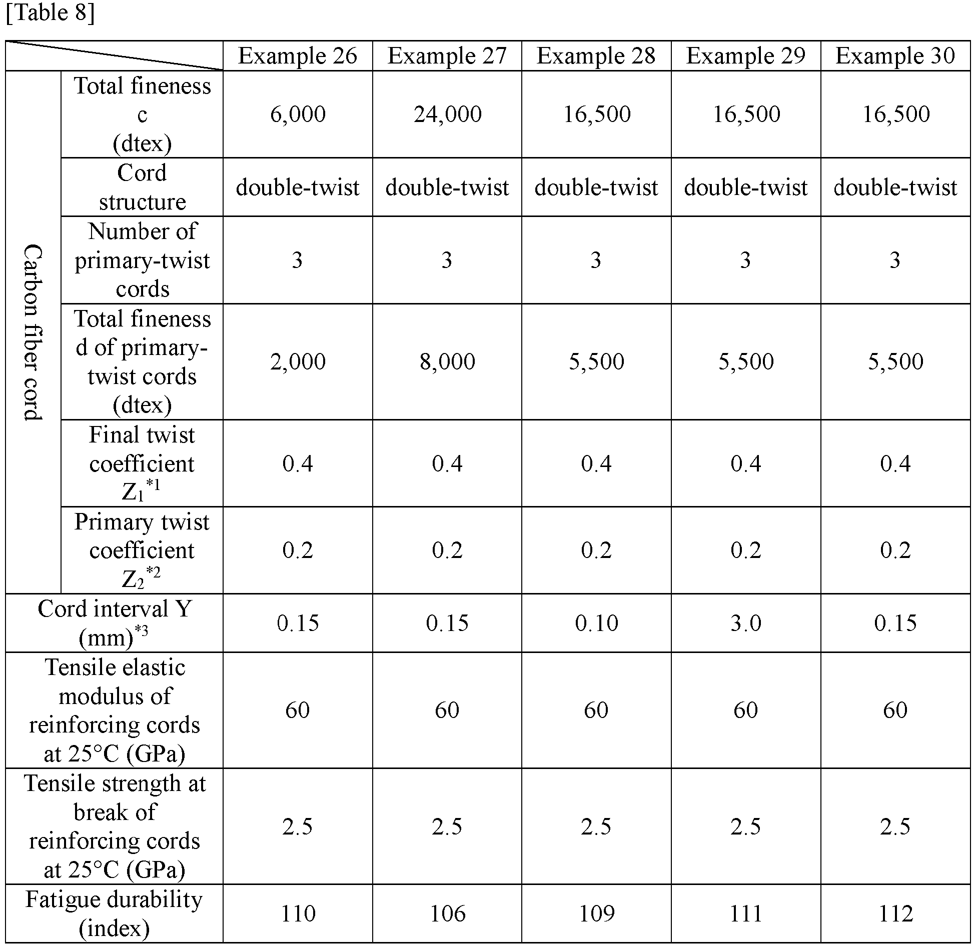

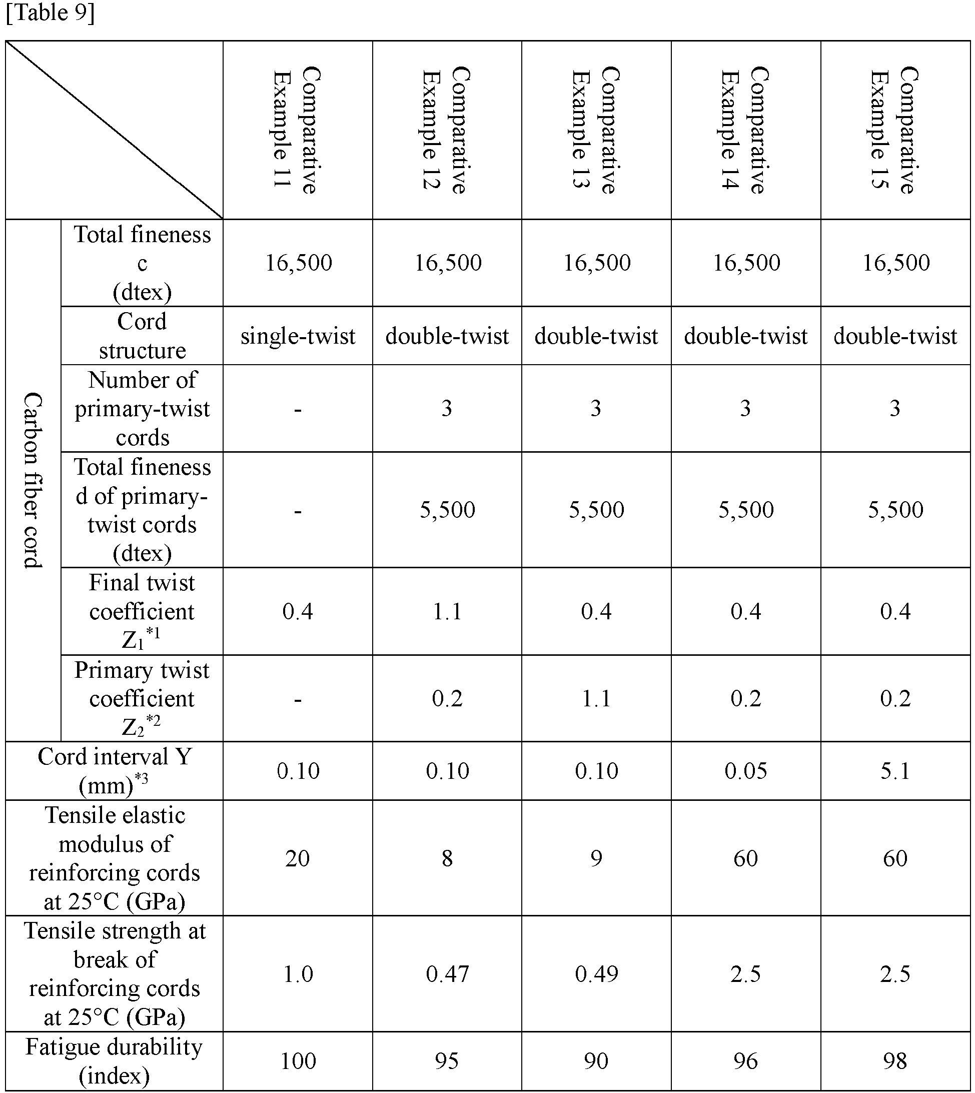

As shown in Tables above, it was confirmed that, according to the present invention, a tire reinforcing member in which reinforcing cords have both satisfactory rigidity and satisfactory fatigue durability as well as a tire including the same can be provided.

### DESCRIPTION OF SYMBOLS

1: spiral cord layer
1A: upper layer
1B: lower layer
2: core-material cord layer
2a: core-material cord
10: tire for passenger vehicles
11, 21, 31: tread portion
12, 22, 32: side wall portion
13, 23, 33: bead portion
13a: recess
14, 24, 34: carcass
15, 25, 35: bead core
16, 26, 36: bead filler
17, 27, 37: belt
17a, 17b, 27a to 27d, 37a to 37g: belt layer
18: belt reinforcing layer
18a: cap layer
18b: layered layer
20: tire for trucks and buses
21a: corner
29, 39: belt under-cushion rubber
30: tire for construction vehicles
100, 200: tire reinforcing member
101: reinforcing cord

## Claims

1. A tire reinforcing member, comprising a rubber-cord composite formed by arranging one or plural reinforcing cords in parallel and coating the reinforcing cords with a rubber,
wherein,
the reinforcing cords comprise carbon fiber cords having a double-twist structure constituted by final-twist cords formed by further twisting plural primary-twist cords each obtained by twisting plural carbon fiber filaments,
when a final twist number and a primary twist number of the carbon fiber cords are defined as "a" and "b", respectively, a total fineness of the carbon fiber cords is defined as "c", a total fineness of the primary-twist cords is defined as "d" and a cord specific gravity is defined as "C", the carbon fiber cords have a final twist coefficient Z₁, which is represented by Z₁ = tanθ₁ = a × √(0.125 × c/C)/1,000, in a range of 0.01 to 1.0, and a primary twist coefficient Z₂, which is represented by Z₂ = tanθ₂ = b × √(0.125 × d/C)/1,000, in a range of 0.01 to 1.0, and
when an end count of the reinforcing cords is defined as "A" (cords/50 mm) and a cord diameter of the reinforcing cords is defined as "B" (mm), a cord interval Y in a direction orthogonal to the cord longitudinal direction between the reinforcing cords that are adjacent to each other in the tire reinforcing member, which is represented by Y = (50 - A × B)/A, is in a range of 0.1 to 5 mm.

2. The tire reinforcing member according to claim 1, wherein the carbon fiber cords have a final twist coefficient Z₁ in a range of 0.01 to 0.9 and a primary twist coefficient Z₂ in a range of 0.01 to 0.5.

3. The tire reinforcing member according to claim 2, wherein the carbon fiber cords have a final twist coefficient Z₁ in a range of 0.3 to 0.7 and a primary twist coefficient Z₂ in a range of 0.1 to 0.35.

4. The tire reinforcing member according to any one of claims 1 to 3, wherein
the total fineness c of the carbon fiber cords is in a range of 1,000 to 30,000 dtex, and
the total fineness d of the primary-twist cords is in a range of 300 to 10,000 dtex.

5. The tire reinforcing member according to claim 4, wherein
the total fineness c of the carbon fiber cords is in a range of 5,000 to 30,000 dtex, and
the total fineness d of the primary-twist cords is in a range of 1,500 to 10,000 dtex.

6. The tire reinforcing member according to claim 5, wherein
the total fineness c of the carbon fiber cords is in a range of 10,000 to 21,000 dtex, and
the total fineness d of the primary-twist cords is in a range of 3,000 to 7,000 dtex.

7. The tire reinforcing member according to any one of claims 1 to 6, comprising a spiral cord layer in which an upper layer and a lower layer are formed by spirally winding the rubber-cord composite.

8. The tire reinforcing member according to claim 7, comprising a core-material cord layer between the upper layer and the lower layer of the spiral cord layer.

9. The tire reinforcing member according to claim 8, wherein a core-material cord of the core-material cord layer is composed of a metal cord, and
the core-material cord has an inclination angle of 40° to 90° with respect to the longitudinal direction of the core-material cord layer.

10. The tire reinforcing member according to claim 8 or 9, wherein the core-material cord layer has a thickness of 1 to 3 mm.

11. A tire comprising the tire reinforcing member according to any one of claims 1 to 10.
